# EUROPÄISCHE PATENTANMELDUNG

(11) **EP 1 191 619 A2**
(43) Veröffentlichungstag der Anmeldung: **27.03.2002**
(21) Anmeldenummer: 01122057.1
(22) Anmeldetag: 14.09.2001
(51) Int. Cl.: H01M 8/04, B60R 16/02, B60K 1/04, B60K 6/04

(54) **Startvorrichtung für Brennstoffzellensysteme**

(30) Priorität: 23.09.2000 DE 10047200
(71) Anmelder: XCELLSIS GmbH, 73230 Kirchheim / Teck-Nabern (DE)
(72) Erfinder: Graage, Klaus, 73230 Kirchheim/Teck (DE); Zur Megede, Detlef, Dr., 73230 Kirchheim/Teck (DE)
(74) Vertreter: Kocher, Klaus-Peter Dipl.-Phys

(57) **Zusammenfassung**

Die Erfindung betrifft eine Vorrichtung zum Starten, vorwiegend zum Kaltstarten, von Brennstoffzellensystemen, umfassend ein Stromerzeugungssystem (12), zur Erzeugung elektrischer Energie und ein Gaserzeugungssystem (13) zur Erzeugung von H₂-reichen Gas für das Stromerzeugungssystem (12). Gemäß der Erfindung ist ein Verbrennungsmotor (1) zur Erzeugung mechanischer Energie vorhanden und über eine Antriebswelle (4) einem Luftkompressor (3) zur Luftversorgung des Gaserzeugungssystems zuschaltbar.

## Beschreibung

Die Erfindung betrifft eine Startvorrichtung, vorwiegend zum Kaltstarten, von Brennstoffzellensystemen. Das Brennstoffzellensystem umfasst ein Stromerzeugungssystem zur Erzeugung elektrischer Energie sowie ein Gaserzeugungssystem zur Erzeugung von H₂-reichem Gas für das Stromerzeugungssystem.

Brennstoffzellensysteme für mobile Anwendungen verwenden flüssigen Kraftstoff um im Gaserzeugungssystem Wasserstoff zu erzeugen. Das Gaserzeugungssystem ist allerdings erst nach Erreichen einer bestimmten vom Kraftstoff abhängigen Betriebstemperatur funktionsfähig, so dass es zu Beginn der Fahrzeuginbetriebnahme aufgeheizt werden muss. Die dazu erforderliche thermische Energie wird durch Verbrennen von Kraftstoff erzeugt. Hierbei ist die Energieversorgung für die für den Verbrennungsvorgang benötigte Luftversorgung ein limitierender Faktor. Je mehr Luft für die Verbrennung bereitgestellt werden kann, desto schneller wird die Betriebstemperatur des Gaserzeugungssystems erreicht. Erst nach Erreichen der Betriebstemperatur kann das Gaserzeugungssystem Brennstoff, z.B. Wasserstoff für die Brennstoffzellen liefern. Für die Luftversorgung des Gaserzeugungssystems ist jedoch elektrische Energie zum Antreiben der Luftfördereinrichtung notwendig.
Elektrischer Strom steht in mobilen Brennstoffzellensystemen aber vor Erreichen der Betriebstemperatur und Inbetriebnahme der Brennstoffzelle nur sehr begrenzt zur Verfügung.

Diese Nachteile werden im Stand der Technik durch Einsatz weitere Speichereinheiten, z.B. Batterie, Superkondensator, Wasserstofftank beseitigt.

Die Maßnahmen des Stands der Technik sind mit folgenden Problemen verbunden:
- Unerwünschte Wartezeit zwischen Fahrzeugstart und Anfahren des Fahrzeugs,
- Kaltstart wird bei tiefen Temperaturen durch mangelnde Leistungsabgabe der Batterie zusätzlich erschwert,
- Anzahl der Startversuche ohne Nachladen der Batterie von extern ist begrenzt.

Aufgabe der Erfindung ist es, eine Vorrichtung zu schaffen mit der die Probleme des Stands der Technik beseitigt und somit das Kaltstartverhalten von Brennstoffzellensystemen verbessert werden kann.

Diese Aufgabe wird mit dem Gegenstand des Patentanspruchs 1 gelöst. Weitere vorteilhafte Ausführungen der Erfindung sind Gegenstand weitere Ansprüche.

Die Erfindung wird im folgenden anhand eines Fahrzeugs mit einem Brennstoffzellensystem beschrieben, ist jedoch nicht auf mobile Anwendungen beschränkt und auch für stationäre Anwendungen vorteilhaft.

Gemäß der Erfindung ist ein Verbrennungsmotor zur Erzeugung mechanischer Energie vorhanden und über eine Antriebswelle einem Luftkompressor zur Luftversorgung des Gaserzeugungssystems eines Brennstoffzellensystems zuschaltbar. Somit kann in der Startphase des Fahrzeuges ohne gespeicherte Energie, z.B. Batteriebetrieb, die für das Aufheizen des Gaserzeugungssystems benötigte Verbrennungsluft gefördert werden. Dadurch wird die Betriebstemperatur des Gaserzeugungssystems schneller, typischerweise in weniger als 30 Sekunden, erreicht, wodurch die Startzeit des Stromerzeugungssystems des Fahrzeugs wesentlich verringert wird. Erst bei Erreichen der Betriebstemperatur des Gaserzeugungssystems kann von dem Stromerzeugungssystem Strom bereitgestellt werden.

Die Leistung des Verbrennungsmotors liegt vorteilhaft im Bereich zwischen 1 und 10kW. Die von dem Luftkompressor geförderte Luftmenge beträgt je nach Leistung des Verbrennungsmotors vorteilhaft bis zu 200 Nm³/h.

Vorteilhaft ist eine Kupplung vorhanden, über die der Verbrennungsmotor mit dem Luftkompressor verbunden werden kann. Somit kann der Verbrennungsmotor bei Bedarf jederzeit von dem Luftkompressor abgekoppelt und z.B. aus Gründen der Kraftstoffeinsparung abgeschaltet werden.

In einer weiteren vorteilhaften Ausführung ist eine mechanische Vorrichtung z.B. eine Kurbel oder eine elektrische Vorrichtung, z.B. eine Bordbatterie, zum Starten des Verbrennungsmotors vorhanden. Es ist aber auch möglich, dass durch Betätigen des Türöffners oder des Gaspedals des Fahrzeuges oder durch Anlegen des Anschnallgurtes durch den Fahrer der Verbrennungsmotor automatisch gestartet wird. Unnötige Wartezeiten bis zum Erreichen der Betriebstemperatur des Gaserzeugungssystems können somit vermieden werden.

Das Kühlsystem des Verbrennungsmotors ist bevorzugt mit dem Kühlsystem des Fahrzeuges verbunden.

Die Verbrennungsabgase des Verbrennungsmotors werden durch eine Abgasleitung einem Gasreinigungssystem zugeführt und an die Umwelt abgegeben. Vorteilhaft ist die Abgasleitung des Verbrennungsmotors mit dem Gasreinigungssystem des Gaserzeugungssystems verbunden. Durch diese Maßnahmen wird eine kompaktere und leichtere Bauweise des Fahrzeugs erreicht.

In einer besonders günstigen Ausführungsform ist der Verbrennungsmotor über die Antriebswelle zusätzlich zum Luftkompressor mit einem Generator verbunden. Der Verbrennungsmotor kann somit neben dem Luftkompressor auch den Generator mit mechanischer

Energie versorgen. Der Generator kann neben dem Verbrennungsmotor über den bordeigenen DC/DC-Konverter das 12 V-Netz des Fahrzeuges mit Strom versorgen. Über das 12 V-Netz können auch die Fahrzeugnebenaggregate des Stromerzeugungssystems des Brennstoffzellensystems gespeist werden. Darüber hinaus kann der Generator die Bordbatterie zur elektrischen Kaltstartzündung des Verbrennungsmotors aufladen. Weiterhin kann die im Generator erzeugte Energie direkt in den elektrischen Antriebsmotor des Fahrzeugs gespeist werden, wodurch eine Inbetriebnahme des Fahrzeugs in Notsituationen, z.B. Ausfall des Brennstoffzellensystems möglich ist.

Es ist weiterhin möglich, je nach Betriebszustand des Fahrzeuges, z.B. Fahrzeugstillstand, den Verbrennungsmotor zuzuschalten oder abzukoppeln. Somit kann z.B. bei Fahrzeugstillstand das Stromerzeugungssystem aus Gründen der Kraftstoffeinsparung abgeschaltet werden. Gleichzeitig können mittels des vom Verbrennungsmotors angetriebenen Generators die Fahrzeugnebenaggregate, der Verbrennungsmotor, sowie die Kraftstoff- und Wasserpumpen mit Strom versorgt werden.

Der Generator kann in einer weiteren zweckmäßigen Ausführungsform der Erfindung auch als Elektromotor betrieben werden. Somit ist es möglich, dass bei abgeschaltetem Verbrennungsmotor und geschlossener Kupplung der Elektromotor den Verbrennungsmotor ohne Zündung und Kraftstoff antreibt und somit als zusätzlichen Luftkompressor nutzt.

Weitere Vorteile der Erfindung sind:
- ermöglicht eine wesentlich kleinere Bordbatterie des Fahrzeugs,
- erhöhte Betriebssicherheit, da keine Begrenzung in bezug auf die Anzahl von Startversuchen und in bezug auf die Startfähigkeit bei tiefen Außentemperaturen vorhanden ist,
- Wegfall des üblichen Hochdruckverdichters des Stromerzeugungssystems,
- batterieunabhängiger Fahrzeugbetrieb in Notsituationen möglich.

Im folgenden wird der Aufbau der erfindungsgemäßen Vorrichtung anhand einer Prinzipzeichnung beispielhaft näher erläutert.

In der Prinzipzeichnung ist ein möglicher Aufbau einer erfindungsgemäßen Startvorrichtung für ein 75kW Brennstoffzellensystem dargestellt. Ein Verbrennungsmotor **1** mit einer Leistung von 10kW ist über eine Antriebswelle **4** mit einem Luftkompressor **3** verbunden. Der Verbrennungsmotor **1** erzeugt eine mechanische Wellenleistung von etwa 5kW. Mittels einer Kupplung **2**, welche auf der Antriebswelle **4** zwischen Verbrennungsmotor **1** und Luftkompressor **3** angeordnet ist, kann der Verbrennungsmotor **1** dem Luftkompressor **3** wahlweise zu- oder abgekoppelt werden. Auf der Antriebswelle **4** ist auf der anderen Seite des Luftkompressors **3** ein Generator **5**, welcher auch als Elektromotor betrieben werden kann, angeordnet.

Der Verbrennungsmotor **1** ist mit der Bordbatterie **10** des nicht dargestellten Fahrzeuges verbunden. Mittels der Bordbatterie **10** ist ein elektrisches Starten des Verbrennungsmotors **1** möglich. Zum mechanischen Starten des Verbrennungsmotors **1** ist eine mechanische Startvorrichtung **9**, z.B. eine Kurbel, oder eine Kopplung mit Gaspedal, Türöffner oder Anschnallgurt, vorgesehen. Zur Versorgung des Verbrennungsmotors **1** mit flüssigem Kraftstoff ist ein Kraftstofftank (nicht eingezeichnet) vorgesehen, welcher neben dem Verbrennungsmotor **1** auch das Gaserzeugungssystem **13** mit Kraftstoff versorgt. Dieses kann insbesondere als Reaktor, in dem mittels Wasserdampfreformierung, partieller Oxidation oder autothermer Reformierung von Kohlenwasserstoffen ein H₂-reiches Gas erzeugt wird, ausgebildet sein. Darüber hinaus ist zur Luft/Kraftstoff-Gemischbildung eine Luftversorgung vorgesehen. Nicht dargestellt sind eine Kraftstoffpumpe und die Mittel zur Gemischbildung am Verbrennungsmotor **1** und andere für den Betrieb des Verbrennungsmotors **1** notwendige Aggregate, z.B. Lichtmaschine, Zündanlage. Das Kühlsystem des Verbrennungsmotors **1** ist mit dem Kühlkreislauf **6** des Fahrzeugs verbunden. Die Verbrennungsabgase des Verbrennungsmotors **1** werden durch eine Abgasleitung **7** dem Gasreinigungssystem **8** für das Gaserzeugungssystems **13** zugeführt und an die Umgebung abgegeben.

Der Luftkompressor **3** wird durch die Antriebswelle **4** angetrieben und fördert Umgebungsluft zum Gaserzeugungssystem **13** des Brennstoffzellensystems. Diese Luft dient als Verbrennungsluft zum Aufheizen des Gaserzeugungssystems **13** in der Startphase des Fahrzeugs. Darüber hinaus treibt der Luftkompressor 3 über die Antriebswelle **4** den Generator **5** an. Der Generator **5** erzeugt eine elektrische Leistung von etwa 3kW bei einer Brennstoffzellen-Spannungslage von 250-400 V.

Der Generator **5** ist mit dem bordeigenen DC/DC-Konverter **11** des Fahrzeugs verbunden. Über den bordeigenen DC/DC-Konverter **11** speist der Generator **5** das 12 V-Netz des Fahrzeuges und versorgt alle Fahrzeugnebenaggregate, z.B. Zündanlage, Kraftstoff- und Wasserpumpen. Darüber hinaus wird die Bordbatterie **10** aufgeladen und Strom für die Stromversorgung des Verbrennungsmotors **1** bereitgestellt. Der Generator **5** ist ebenfalls direkt mit der Stromversorgung **14** des elektrischen Antriebsmotors (nicht dargestellt) verbunden. Somit kann die vom Generator erzeugte Energie in Notsituationen direkt in den elektrischen Antriebsmotor gespeist werden und dazu dienen, das Fahrzeug zu bewegen.

Bei Inbetriebnahme des Fahrzeuges wird der Verbrennungsmotor **1** entweder mechanisch oder elektrisch gestartet. Über die geschlossene Kupplung **2** wird der Kompressor **3** und der Generator **5** angetrieben. Der Generator **5** versorgt die zum Starten benötigten Komponenten des Stromerzeugungssystems **12**, während der Luftkompressor **3** die benötigte Verbrennungsluft für das schnelle Aufheizen des Gaserzeugungssystems **13** fördert. Nach Erreichen der Betriebstemperatur des Gaserzeugungssystems **13** wird die Kupplung **2** geöffnet. Der somit abgekoppelte Verbrennungsmotor **1** wird abgeschaltet. Das Stromerzeugungssystem **12** des Brennstoffzellensystems übernimmt die für die Funktion des Fahrbetriebes benötigte Stromerzeugung. Der Generator 5 treibt als Elektromotor den Kompressor 3 an und wird vom Brennstoffzellensystem versorgt.

Wahlweise kann der Generator **5** als Elektromotor, der von der Fahrzeugbatterie angetrieben wird, betrieben werden. Über die. Antriebswelle **4** kann damit der Kompressor **3** angetrieben werden. Bei geschlossener Kupplung **2** ist auch der Antrieb des Verbrennungsmotors **1** möglich.

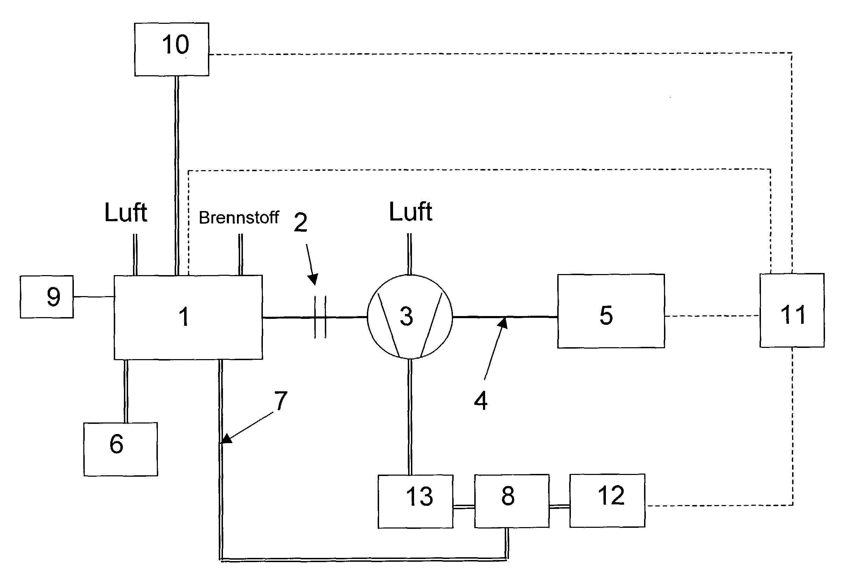

## Patentansprüche

1. Startvorrichtung, vorwiegend zum Kaltstarten, von Brennstoffzellensystemen, umfassend ein Stromerzeugungssystem (12), zur Erzeugung elektrischer Energie und ein Gaserzeugungssystem (13) zur Erzeugung von H₂-reichem Gas für das Stromerzeugungssystem (12) , **dadurch gekennzeichnet, dass** ein Verbrennungsmotor (1) zur Erzeugung mechanischer Energie vorhanden und über eine Antriebswelle (4) einem Luftkompressor (3) zur Luftversorgung des Gaserzeugungssystems (13) zuschaltbar ist.

2. Startvorrichtung nach Anspruch 1, **dadurch gekennzeichnet, dass** der Verbrennungsmotor (1) bis zum Erreichen der Betriebstemperatur des Gaserzeugungssystems (13) über eine Kupplung (2) mit dem Luftkompressor (3) zuschaltbar ist.

3. Startvorrichtung nach einem der vorangehenden Ansprüche, **dadurch gekennzeichnet, dass** der Verbrennungsmotor (1) mechanisch (9), z.B. Kurbel oder elektrisch (10), z.B. Bordbatterie gestartet werden kann.

4. Startvorrichtung nach einem der vorangehenden Ansprüche, **dadurch gekennzeichnet, dass** ein Generator (5) zur elektrischen Versorgung der zum Starten benötigten Komponenten des Stromerzeugungssystems (12) vorhanden ist.

5. Startvorrichtung nach Anspruch 4, **dadurch gekennzeichnet, dass** der Verbrennungsmotor (1) über die Antriebswelle (4) den Generator (5) antreiben kann.

6. Startvorrichtung nach Ansprüchen 4 oder 5, **dadurch gekennzeichnet, dass** der Generator (5) den elektrischen Antriebsmotor des Fahrzeuges mit elektrischer Energie versorgen kann.

7. Startvorrichtung nach Ansprüchen 4, **dadurch gekennzeichnet, dass** der Generator (5) als Elektromotor betrieben werden kann.

8. Startvorrichtung nach Anspruch 7, **dadurch gekennzeichnet, dass** der als Elektromotor betriebene Generator (5) den Luftkompressor (3) antreiben kann.

9. Startvorrichtung nach Anspruch 7 oder 8, **dadurch gekennzeichnet, dass** der Elektromotor (5) den Verbrennungsmotor (1) zur Erzeugung zusätzlicher Druckluft für das Gaserzeugungssystem (13) antreiben kann.

10. Startvorrichtung nach einem der vorangehenden Ansprüche, **dadurch gekennzeichnet, dass** die Abgase des Verbrennungsmotors (1) in das Gasreinigungssystem (8) für das Gaserzeugungssystem (12) geleitet werden.
